# EUROPÄISCHE PATENTSCHRIFT

(11) **EP 4 529 086 B1**
(45) Veröffentlichungstag und Bekanntmachung des Hinweises auf die Patenterteilung: **30.07.2025**
(21) Anmeldenummer: 23198264.6
(22) Anmeldetag: 19.09.2023
(51) Int. Cl.: H04L 41/00, H04L 12/12, H04L 43/0811, H04L 9/40

(54) **VORRICHTUNG ZUR KRYPTOGRAPHISCHEN ABSICHERUNG EINES KOMMUNIKATIONSGERÄTS FÜR EIN INDUSTRIELLES AUTOMATISIERUNGSSYSTEM**
DEVICE FOR CRYPTOGRAPHIC PROTECTION OF A COMMUNICATION DEVICE FOR AN INDUSTRIAL AUTOMATION SYSTEM
DISPOSITIF DE PROTECTION CRYPTOGRAPHIQUE D'UN APPAREIL DE COMMUNICATION POUR UN SYSTÈME D'AUTOMATISATION INDUSTRIELLE

(43) Veröffentlichungstag der Anmeldung: 26.03.2025
(73) Patentinhaber: Siemens Aktiengesellschaft, 80333 München (DE)
(72) Erfinder: Bercht, Gert, 91247 Vorra (DE); Rosenberg, Jens Ansgar, 91438 Bad Windsheim (DE)
(74) Vertreter: Siemens Patent Attorneys

(56) Entgegenhaltungen:
- WO-A1-2005/026976
- JP-A- 2009 111 800
- US-A1- 2022 067 221

## Beschreibung

Die vorliegende Erfindung betrifft eine Vorrichtung zur kryptographischen Absicherung eines Kommunikationsgeräts für ein industrielles Automatisierungssystem, insbesondere eines Geräts ohne Kryptographie-Funktionen.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

In EP 3 270 560 B1 ist ein Verfahren zum Aufbau gesicherter Kommunikationsverbindungen zu einem industriellen Automatisierungssystem beschrieben, bei dem eine Verbindungsverwaltungseinrichtung bei einem positiven Berechtigungsüberprüfungsergebnis Zugriffskontrollinformationen zum Aufbau einer verschlüsselten Kommunikationsverbindung zwischen einem ersten Kommunikationsgerät eines anfordernden Benutzers und einem ausgewählten zweiten Kommunikationsgerät für diese Kommunikationsgeräte bereitstellt. Dabei wird die Verbindungsverwaltungseinrichtung durch eine auf einem Firewall-System ablaufende Server-Instanz gebildet. Über eine verschlüsselte Kommunikationsverbindung zwischen dem ersten Kommunikationsgerät des anfordernden Benutzers und dem ausgewählten zweiten Kommunikationsgerät übermittelte Datenpakete werden für eine auf festgelegten Sicherheitsregeln basierende Überprüfung durch das Firewall-System entschlüsselt und bei erfolgreicher Überprüfung verschlüsselt zum ersten Kommunikationsgerät des anfordernden Benutzers oder zum ausgewählten zweiten Kommunikationsgerät weitergeleitet.

Die ältere europäische Patentanmeldung EP 4 283 925 A1 betrifft eine gesicherte Übermittlung zeitkritischer Daten innerhalb eines Kommunikationssystems, das mehrere lokale Netze, in dem Daten mittels Switching übermittelt werden, zumindest ein gegenüber den lokalen Netzen überlagertes Netz, in dem Daten mittels Routing übermittelt werden, und ein Gateway-System zur Anbindung des Kommunikationssystems an zumindest ein ungesichertes externes Netz umfasst. Netzwerkschicht-Kommunikation über das überlagerte Netz wird nur zwischen authentifizierten Systemkomponenten autorisiert. Switche authentifizieren jeweils angeschlossene Endgeräte und ordnen diese entsprechend einer jeweiligen Endgeräte-Identität einem physikalischen oder logischen lokalen Netz zu. Sicherungsschicht-Kommunikation wird innerhalb der lokalen Netze implizit aufgrund einer Zuordnung der jeweiligen Endgeräte zum selben lokalen Netz autorisiert. Kommunikation auf OSI-Schicht 3-7 zwischen Endgeräten unterschiedlicher lokaler Netze bzw. mit Endgeräten im ungesicherten externen Netz wird mittels Zero-Trust-Proxies autorisiert, die jeweils einem lokalen Netz zugeordnet sind.

Aus der älteren europäischen Patentanmeldung EP 4 300 882 A1 ist ein Verfahren zur gesicherten Übermittlung zeitkritischer Daten innerhalb eines Kommunikationssystems bekannt. Das Kommunikationssystem umfasst mehrere lokale Netze, die jeweils zumindest einen Switch und mehrere Endgeräte umfassen, eine Steuerungseinheit, die Funktionen mehrerer Switche und Endgeräte steuert, und ein der Steuerungseinheit zugeordnetes Steuerungsnetz, das von den lokalen Netzen separiert ist. Kommunikation innerhalb der lokalen Netze wird implizit aufgrund einer Zuordnung der jeweiligen Endgeräte zum selben lokalen Netz autorisiert. Jedem Endgerät ist ein Zero-Trust-Adapter zugeordnet, der Statusinformationen des Endgeräts erfasst, die Statusinformationen über das Steuerungsnetz zur Auswertung an die Steuerungseinheit weiterleitet und das Endgerät gegenüber der Steuerungseinheit bzw. Kommunikationspartnern authentisiert. Die Steuerungseinheit ermittelt für die Endgeräte auf Grundlage der Statusinformationen jeweils eine Vertrauenskennzahl und wendet von der Vertrauenskennzahl abhängige Regeln zur Konfiguration bzw. für zulässige Kommunikationsbeziehungen der Endgeräte an.

In US 2022/067221 A1 ist ein Verfahren zur Implementierung von Sicherheitsoperationen in einem Ein-/Ausgabe- bzw. I/O-Gerät beschrieben. Dabei umfasst das I/O-Gerät einen I/O-Port, einen mit einem Host verbundenen Host-Bus, eine mit dem I/O-Port und dem Host-Bus gekoppelte Datenverarbeitungspipeline innerhalb des I/O-Geräts sowie ein Hardware-Sicherheitsmodul. Das Hardware-Sicherheitsmodul ist ebenfalls mit dem Host-Bus sowie der Datenverarbeitungspipeline verbunden und umfasst eine kryptografische Engine, die Daten der Datenverarbeitungspipeline verschlüsseln und entschlüsseln kann. Außerdem umfasst das Hardware-Sicherheitsmodul einen sicheren Schlüsselspeicher, in dem Verschlüsselungsschlüssel zur Ver- und Entschlüsselung von Paketen gespeichert sind. Dabei sind im sicheren Schlüsselspeicher Schlüssel hinterlegt, die durch das Hardware-Sicherheitsmodul verschlüsselt und über dieses zugänglich sind.

Insbesondere Zero-Trust-Konzepte sehen vor, dass sich Benutzer bzw. Geräte unabhängig von ihrer jeweiligen Position oder Umgebung sich gegenüber Kommunikationspartner bzw. bei einem Zugriff auf geschützte Ressourcen authentisieren, um nach einer erfolgreichen Authentifizierung auf gewünschte Daten oder Anwendungen zugreifen zu können. Allerdings findet eine Erfüllung von Cyber-Security-Anforderungen Grenzen in Anwendungsgebieten, in denen nicht jeder Benutzer oder jedes Gerät in der Lage ist, unter wirtschaftlichen Rahmenbedingungen, eine sichere Authentifizierung, Ver- und Entschlüsselung bzw. Aufbewahrung kryptographischer Schlüssel gewährleisten zu können. Gerade in industriellen Automatisierungssystemen mit bereits über einen längeren Zeitraum genutzten Bestandskomponenten ist dies vielfach ein Problem.

Der vorliegenden Erfindung liegt daher die Aufgabe zugrunde, eine aufwandsarm in bestehende Umgebungen integrierbare Lösung zur kryptographischen Absicherung eines Kommunikationsgeräts, insbesondere innerhalb eines industriellen Automatisierungssystems, zu schaffen.

Diese Aufgabe wird erfindungsgemäß durch eine Vorrichtung mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Vorrichtung zur kryptographischen Absicherung eines Kommunikationsgeräts für ein industrielles Automatisierungssystem umfasst ein erstes Ethernet-Steckverbindungselement zur Verbindung mit einem Kommunikationsnetz, innerhalb dessen Nachrichten kryptographisch gesichert, insbesondere verschlüsselt, übermittelt werden, ein zweites Ethernet-Steckverbindungselement zur Verbindung mit dem Kommunikationsgerät und ein Kryptographie-Modul. Beispielsweise kann das erste Ethernet-Steckverbindungselement eine RJ45- oder M12-Buchse sein, während das zweite Ethernet-Steckverbindungselement ein RJ45- oder M12-Stecker ist.

Das Kryptographie-Modul ist erfindungsgemäß zur Speicherung von dem Kommunikationsgerät bzw. Benutzern des Kommunikationsgeräts zugeordneten kryptographischen Schlüsseln bzw. Zertifikaten, zur Verschlüsselung vom Kommunikationsgerät gesendeter Nachrichten und zur Entschlüsselung an das Kommunikationsgerät gesendeter Nachrichten eingerichtet. Vorzugsweise ist das Kryptographie-Modul ferner dazu eingerichtet ist, Zertifikate von Kommunikationspartnern des Kommunikationsgeräts bzw. der Benutzer des Kommunikationsgeräts zu überprüfen.

Am zweiten Ethernet-Steckverbindungselement ist erfindungsgemäß ein Sicherheitssensor zur Überwachung einer Trennung der Verbindung mit dem Kommunikationsgerät vorgesehen, der dazu eingerichtet ist, bei Trennung der Verbindung mit dem Kommunikationsgerät eine Sperrung der kryptographischen Schlüssel bzw. Zertifikate bzw. des Kryptographie-Moduls auszulösen. Damit ermöglicht die vorliegende Erfindung insbesondere, nicht PROFINET Security-fähige Geräte an ein PROFINET Security-Netzwerk anzuschließen und somit an kryptographisch gesicherter Netzwerkkommunikation teilzunehmen. Ein Geräteaustausch ist also hierfür nicht erforderlich.

Erfindungsgemäß umfasst das Kryptographie-Modul einen Prozessor, z.B. FPGA oder ASIC, der zur Ver- und Entschlüsselung von Nachrichten eingerichtet ist. Außerdem sind Funktionen des Kryptographie-Moduls durch ein Engineering-Tool über eine verschlüsselte Verbindung bzw. über eine dedizierte Konfigurationsschnittstelle der Vorrichtung steuerbar. Darüber hinaus ist der Sicherheitssensor zur Überwachung der Trennung der Verbindung zwischen der Vorrichtung und dem Kommunikationsgerät durch das Engineering-Tool über die verschlüsselte Verbindung bzw. über die dedizierte Konfigurationsschnittstelle aktivierbar bzw. deaktivierbar.

Ein Aufbau der verschlüsselten Verbindung zur Steuerung der Funktionen des Kryptographie-Moduls kann beispielsweise über das erste Ethernet-Steckverbindungselement erfolgen. Darüber hinaus kann die dedizierte Konfigurationsschnittstelle vorteilhafterweise mittels einer USB-Schnittstelle, einer seriellen Schnittstelle, einer NFC-Schnittstelle, einer Bluetooth-Schnittstelle oder mittels WLAN realisiert sein.

Entsprechend einer besonders bevorzugten Ausgestaltung der vorliegenden Erfindung ist der Sicherheitssensor an einem Steckerkragen bzw. an einer Steckverbindungskontaktfläche der Vorrichtung mittels eines mechanischen Tasters, mittels eines kapazitiven oder resistiven Sensorelements, mittels eines Reed-Kontakts, mittels eines Ultraschall-Sensorelements oder mittels einer photo-optischen Sensoreinheit realisiert. Somit ist bei einer mechnischen Trennung zwischen der erfindungsgemäßen Vorrichtung und dem abzusichernden Kommunikationsgerät stets eine zuverlässige Sperrung der kryptographischen Schlüssel bzw. Zertifikate bzw. des Kryptographie-Moduls sichergestellt. Vorteilhafterweise ist der der Sicherheitssensor ferner dafür eingerichtet, aktiviert zu werden, wenn am zweiten Ethernet-Steckverbindungselement die Verbindung mit dem Kommunikationsgerät hergestellt wird.

Bei Realisierung des Sicherheitssensors auf Basis einer photo-optischer Sensoreinheit umfasst diese vorteilhafterweise eine lichtemittierende Diode und einen Phototransistor. Anhand einer durch die lichtemittierende Diode in den Phototransistor emittierten Lichtmenge- bzw. -intensität kann das Trennen der Verbindung zwischen der Vorrichtung und dem Kommunikationsgerät zuverlässig detektiert werden. Zusätzlich kann die lichtemittierende Diode codierte pulsförmige Signale aussenden, deren durch den Phototransistor empfangene Pulsmuster mit Referenzmuster auf Übereinstimmung verglichen werden.

Die vorliegende Erfindung wird an einem Ausführungsbeispiel anhand der Zeichnung näher erläutert. Es zeigt
- Figur 1: eine schematische Darstellung einer Vorrichtung zur kryptographischen Absicherung eines Kommunikationsgeräts für ein industrielles Automatisierungssystem
- Figur 2: eine perspektivische Darstellung der Vorrichtung gemäß Figur 1 mit einem abzusichernden Kommunikationsgerät in verbundenem Zustand,
- Figur 3: die Vorrichtung und das abzusichernde Kommunikationsgerät gemäß Figur 2 in getrenntem Zustand.

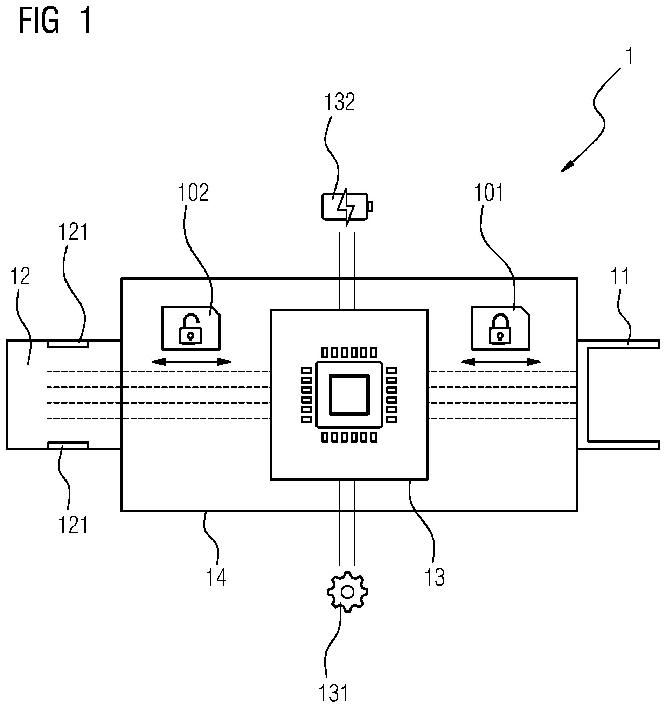

Die in Figur 1 dargestellte Vorrichtung 1 dient zur kryptographischen Absicherung eines Kommunikationsgeräts für ein industrielles Automatisierungssystem. Ein solches Kommunikationsgerät kann beispielsweise PROFINET-Gerät sein, das für sich nicht PROFINET-Security-fähig ist, aber in einer PROFINET-Security-Umgebung betrieben werden soll. In einem anderen Anwendungsszenario kann das Kommunikationsgerät ein Gerät ohne Kryptographie-Funktionen sein, das in einer Zero-Trust-Umgebung betrieben werden soll.

Die Vorrichtung umfasst ein erstes Ethernet-Steckverbindungselement 11 zur Verbindung mit einem Kommunikationsnetz, innerhalb dessen Nachrichten kryptographisch gesichert übermittelt werden. Außerdem ist ein zweites Ethernet-Steckverbindungselement 12 zur Verbindung mit dem Kommunikationsgerät vorgesehen. Im vorliegenden Ausführungsbeispiel ist das erste Ethernet-Steckverbindungselement 11 eine RJ45-Buchse, während das zweite Ethernet-Steckverbindungselement 12 ein RJ45-Stecker ist. Entsprechend einer alternativen Ausführungsform kann das erste Ethernet-Steckverbindungselement 11 eine M12-Buchse sein, während das zweite Ethernet-Steckverbindungselement 12 ein M12-Stecker sein kann. Außerdem kann das erste Ethernet-Steckverbindungselement 11 auch ein Stecker sein, während das zweite Ethernet-Steckverbindungselement 12 eine Buchse sein kann. Grundsätzlich sind auch Stecker-Stecker- oder Buchse-Buchse-Kombinationen möglich.

Darüber hinaus umfasst die Vorrichtung 1 ein Kryptographie-Modul 13, das zur Speicherung von dem Kommunikationsgerät bzw. Benutzern des Kommunikationsgeräts zugeordneten kryptographischen Schlüsseln bzw. Zertifikaten eingerichtet ist. Zusätzlich ist das Kryptographie-Modul 13 zur Entschlüsselung an das Kommunikationsgerät gesendeter verschlüsselter Nachrichten 101 und zur Verschlüsselung vom Kommunikationsgerät gesendeter unverschlüsselter Nachrichten 102 eingerichtet. Insbesondere ist das Kryptographie-Modul 13 dazu eingerichtet, Zertifikate von Kommunikationspartnern des Kommunikationsgeräts bzw. der Benutzer des Kommunikationsgeräts zu überprüfen.

Das Kryptographie-Modul 13 umfasst vorzugsweise einen Prozessor, ein FPGA oder ein ASIC, der bzw. das zur Ver- und Entschlüsselung von Nachrichten eingerichtet ist. Vorteilhafterweise sind Funktionen des Kryptographie-Moduls 13 durch ein Engineering-Tool über eine verschlüsselte Verbindung bzw. über eine dedizierte Konfigurationsschnittstelle 131 der Vorrichtung steuerbar. Die dedizierte Konfigurationsschnittstelle kann beispielsweise mittels einer USB-Schnittstelle, einer seriellen Schnittstelle, einer NFC-Schnittstelle, einer Bluetooth-Schnittstelle oder mittels WLAN realisiert sein. Falls keine dedizierte Konfigurationsschnittstelle 131 vorgesehen ist, kann ein Aufbau der verschlüsselten Verbindung zur Steuerung der Funktionen des Kryptographie-Moduls 13 über das erste Ethernet-Steckverbindungselement 11 erfolgen.

Außerdem umfasst die in Figur 1 dargestellte Vorrichtung 1 einen optionalen Stromversorgungsanschluss 132. Alternativ hierzu kann die Vorrichtung 1 beispielsweise per Power over Ethernet mit Strom versorgt werden.

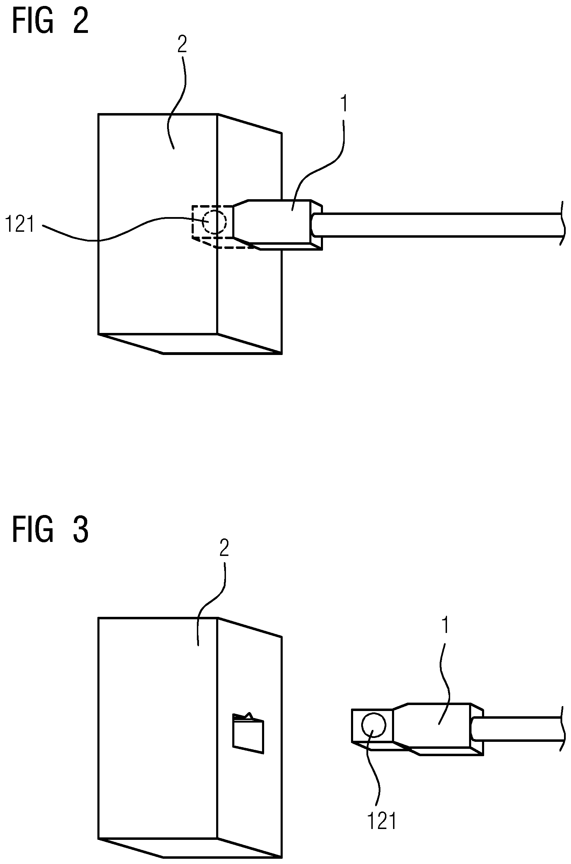

Am zweiten Ethernet-Steckverbindungselement 12 ist ein Sicherheitssensor 121 zur Überwachung einer Trennung der in Figur 2 dargestellten Verbindung mit dem Kommunikationsgerät 2 vorgesehen. Der Sicherheitssensor 121 ist dazu eingerichtet, bei einer in Figur 3 dargestellten Trennung der Verbindung mit dem Kommunikationsgerät 2 eine Sperrung der kryptographischen Schlüssel bzw. Zertifikate bzw. des Kryptographie-Moduls 13 auszulösen. Vorteilhafterweise ist der Sicherheitssensor 121 an einem Steckerkragen oder an einer Steckverbindungskontaktfläche des zweiten Ethernet-Steckverbindungselements 12 bzw. eines das Kryptographie-Modul 13 einschließenden Gehäuses 14 der Vorrichtung 1 angeordnet.

Der Sicherheitssensor 121 kann beispielsweise mittels eines mechanischen Tasters, mittels eines kapazitiven oder resistiven Sensorelements, mittels eines Reed-Kontakts, mittels eines Ultraschall-Sensorelements oder mittels einer photo-optischen Sensoreinheit realisiert sein. Im Fall einer Realisierung mittels einer photo-optischen Sensoreinheit umfasst diese eine lichtemittierende Diode und einen Phototransistor. Anhand einer durch die lichtemittierende Diode in den Phototransistor emittierten Lichtmenge- bzw. -intensität kann das Trennen der Verbindung zwischen der Vorrichtung 1 und dem Kommunikationsgerät 2 zuverlässig detektiert werden. Zusätzlich kann die lichtemittierende Diode so angesteuert werden, dass sie eine vorgegebene bzw. zufällige Impulsfolge aussendet. Am Phototransistor empfangene Signale können dann darauf verglichen werden, ob sie mit dieser Impulsfolge übereinstimmen.

Entsprechend einer bevorzugten Ausführungsform ist der Sicherheitssensor 121 zur Überwachung der Trennung der Verbindung zwischen der Vorrichtung 1 und dem Kommunikationsgerät 2 durch das Engineering-Tool über die verschlüsselte Verbindung bzw. über die dedizierte Konfigurationsschnittstelle 131 aktivierbar bzw. deaktivierbar. Alternativ oder zusätzlich kann der Sicherheitssensor 121 aktiviert werden, wenn am zweiten Ethernet-Steckverbindungselement 12 die Verbindung mit dem Kommunikationsgerät 2 hergestellt wird.

## Patentansprüche

1. Vorrichtung zur kryptographischen Absicherung eines Kommunikationsgeräts für ein industrielles Automatisierungssystem, wobei die Vorrichtung
- ein erstes Ethernet-Steckverbindungselement (11) zur Verbindung mit einem Kommunikationsnetz, innerhalb dessen Nachrichten kryptographisch gesichert übermittelt werden,
- ein zweites Ethernet-Steckverbindungselement (12) zur Verbindung mit dem Kommunikationsgerät (2) und
- ein Kryptographie-Modul (13) umfasst, das zur Speicherung von dem Kommunikationsgerät und/oder Benutzern des Kommunikationsgeräts zugeordneten kryptographischen Schlüsseln und/oder Zertifikaten, zur Verschlüsselung vom Kommunikationsgerät gesendeter Nachrichten (102) und zur Entschlüsselung an das Kommunikationsgerät gesendeter Nachrichten (101) eingerichtet ist,
- wobei das Kryptographie-Modul (13) einen Prozessor umfasst, der zur Ver- und Entschlüsselung von Nachrichten eingerichtet ist, und Funktionen des Kryptographie-Moduls durch ein Engineering-Tool über eine verschlüsselte Verbindung und/oder über eine dedizierte Konfigurationsschnittstelle (131) der Vorrichtung (1) steuerbar sind,
- wobei am zweiten Ethernet-Steckverbindungselement ein Sicherheitssensor (121) zur Überwachung einer Trennung der Verbindung mit dem Kommunikationsgerät vorgesehen ist, der dazu eingerichtet ist, bei Trennung der Verbindung mit dem Kommunikationsgerät eine Sperrung der kryptographischen Schlüssel und/oder Zertifikate und/oder des Kryptographie-Moduls auszulösen,
- wobei der Sicherheitssensor (121) zur Überwachung der Trennung der Verbindung zwischen der Vorrichtung (1) und dem Kommunikationsgerät (2) durch das Engineering-Tool über die verschlüsselte Verbindung und/oder über die dedizierte Konfigurationsschnittstelle (131) aktivierbar und/oder deaktivierbar ist.

2. Vorrichtung nach Anspruch 1,
bei der das Kryptographie-Modul (13) dazu eingerichtet ist, Zertifikate von Kommunikationspartnern des Kommunikationsgeräts (2) und/oder der Benutzer des Kommunikationsgeräts zu überprüfen.

3. Vorrichtung nach einem der Ansprüche 1 oder 2,
bei der ein Aufbau der verschlüsselten Verbindung zur Steuerung der Funktionen des Kryptographie-Moduls (13) über das erste Ethernet-Steckverbindungselement (11) erfolgt.

4. Vorrichtung nach Anspruch 3,
bei der die dedizierte Konfigurationsschnittstelle (131) mittels einer USB-Schnittstelle, einer seriellen Schnittstelle, einer NFC-Schnittstelle, einer Bluetooth-Schnittstelle oder mittels WLAN realisiert ist.

5. Vorrichtung nach einem der Ansprüche 1 bis 4,
bei der der Sicherheitssensor (121) an einem Steckerkragen und/oder an einer Steckverbindungskontaktfläche der Vorrichtung mittels eines mechanischen Tasters, mittels eines kapazitiven oder resistiven Sensorelements, mittels eines Reed-Kontakts, mittels eines Ultraschall-Sensorelements oder mittels einer photo-optischen Sensoreinheit realisiert ist.

6. Vorrichtung nach Anspruch 5,
bei der die photo-optische Sensoreinheit eine lichtemittierende Diode und einen Phototransistor umfasst und bei der anhand einer durch die lichtemittierende Diode in den Phototransistor emittierten Lichtmenge- und/oder -intensität das Trennen der Verbindung zwischen der Vorrichtung (1) und dem Kommunikationsgerät (2) detektierbar ist.

7. Vorrichtung nach einem der Ansprüche 5 oder 6,
bei der der Sicherheitssensor (121) dafür eingerichtet ist, aktiviert zu werden, wenn am zweiten Ethernet-Steckverbindungselement (12) die Verbindung mit dem Kommunikationsgerät (2) hergestellt wird.

8. Vorrichtung nach einem der Ansprüche 1 bis 7,
bei der das erste Ethernet-Steckverbindungselement (11) eine RJ45- oder M12-Buchse ist und bei der das zweite Ethernet-Steckverbindungselement (12) ein RJ45- oder M12-Stecker ist.

## Claims

1. Apparatus for cryptographically securing a communication device for an industrial automation system, wherein the apparatus comprises
- a first Ethernet plug-in connection element (11) for connecting to a communication network, within which it is possible for messages to be transmitted in a cryptographically secured manner,
- a second Ethernet plug-in connection element (12) for connecting to the communication device (2) and
- a cryptography module (13), which is configured for storing cryptographic keys and/or certificates assigned to the communication device and/or users of the communication device, for encrypting messages (102) sent by the communication device and for decrypting messages (101) sent to the communication device,
- wherein the cryptography module (13) comprises a processor, which is configured for encrypting and decrypting messages, and functions of the cryptography module can be controlled by an engineering tool via an encrypted connection and/or via a dedicated configuration interface (131) of the apparatus (1),
- wherein there is provision on the second Ethernet plug-in connection element for a safety sensor (121) for monitoring a disconnection of the connection to the communication device, which safety sensor is configured to trigger a blocking of the cryptographic keys and/or certificates and/or of the cryptography module when the connection to the communication device is disconnected,
- wherein the safety sensor (121) for monitoring the disconnection of the connection between the apparatus (1) and the communication device (2) can be activated and/or deactivated by the engineering tool via the encrypted connection and/or via the dedicated configuration interface (131).

2. Apparatus according to claim 1,
in which the cryptography module (13) is configured to review certificates of communication partners of the communication device (2) and/or the users of the communication device.

3. Apparatus according to one of claims 1 or 2,
in which the encrypted connection for control of the functions of the cryptography module (13) is set up via the first Ethernet plug-in connection element (11).

4. Apparatus according to claim 3,
in which the dedicated configuration interface (131) is realised by means of a USB interface, a serial interface, an NFC interface, a Bluetooth interface or by means of WLAN.

5. Apparatus according to one of claims 1 to 4,
in which the safety sensor (121) is realised on a plug collar and/or on a plug-in connection contact area of the apparatus by means of a mechanical probe, by means of a capacitive or resistive sensor element, by means of a reed contact, by means of an ultrasonic sensor element or by means of a photo-optical sensor unit.

6. Apparatus according to claim 5,
in which the photo-optical sensor unit comprises a light-emitting diode and a phototransistor and in which it is possible to detect the disconnection of the connection between the apparatus (1) and the communication device (2) on the basis of an amount and/or intensity of light emitted by the light-emitting diode into the phototransistor.

7. Apparatus according to one of claims 5 or 6,
in which the safety sensor (121) is configured to be activated when the connection to the communication device (2) is established at the second Ethernet plug-in connection element (12).

8. Apparatus according to one of claims 1 to 7,
in which the first Ethernet plug-in connection element (11) is an RJ45 or M12 socket and in which the second Ethernet plug-in connection element (12) is an RJ45 or M12 plug.

## Revendications

1. Installation de protection cryptographique d'un appareil de communication pour un système d'automatisation industrielle, dans laquelle l'installation comprend :
- un premier élément (11) de connexion par fiche Ethernet pour la connexion à un réseau de communication, dans lequel des messages sont transmis de façon sécurisée de manière cryptographique,
- un deuxième élément (12) de connexion par fiche Ethernet pour la connexion à l'appareil (2) de communication et
- un module (13) de cryptographie, qui est agencé pour la mise en mémoire de clés cryptographiques et/ou de certificats affectés à l'appareil de communication et/ou à des utilisateurs de l'appareil de communication, pour le chiffrement de messages (102) envoyés par l'appareil de communication et pour le déchiffrement de messages (101) envoyés à l'appareil de communication,
- dans laquelle le module (13) de cryptographie comprend un processeur, qui est agencé pour le chiffrement et le déchiffrement de messages, et des fonctions du module de cryptographie peuvent être commandées par un outil d'ingénierie en passant par une connexion chiffrée et/ou par une interface (131) de configuration dédiée de l'installation (1),
- dans laquelle il est prévu, sur le deuxième élément de connexion par fiche Ethernet, un capteur (121) de sécurité pour le contrôle d'une séparation de la connexion à l'appareil de communication, capteur qui est agencé pour, à la séparation de la connexion à l'appareil de communication, déclencher un blocage des clés cryptographiques et/ou des certificats et/ou du module de cryptographie,
- dans laquelle le capteur (121) de sécurité peut, pour le contrôle de la séparation de la connexion entre l'installation (1) et l'appareil (2) de communication, être activé et/ou désactivé pour l'outil d'ingénierie en passant par la connexion chiffrée et/ou par l'interface (131) de configuration dédiée.

2. Installation suivant la revendication 1,
dans laquelle le module (13) de cryptographie est agencé pour contrôler des certificats de partenaires de communication de l'appareil (2) de communication et/ou de l'utilisateur de l'appareil de communication.

3. Installation suivant l'une des revendications 1 ou 2,
dans laquelle un établissement d'une connexion de la connexion chiffrée pour la commande des fonctions du module (13) de cryptographie s'effectue par le premier élément (11) de connexion par fiche Ethernet.

4. Installation suivant la revendication 3,
dans laquelle l'interface (131) de configuration dédiée est réalisée au moyen d'une interface USB, d'une interface sérielle, d'une interface NFC, d'une interface Bluetooth ou au moyen de WLAN.

5. Installation suivant l'une des revendications 1 à 4,
dans laquelle le capteur (121) de sécurité est réalisé sur un collet de connecteur et/ou sur une surface de contact de connexion par fiche de l'installation, au moyen d'un interrupteur mécanique à touche, au moyen d'un élément de capteur capacitif ou résistif, au moyen d'un contact Reed, au moyen d'un élément de capteur ultrasonore ou au moyen d'une unité de capteur photo-optique.

6. Installation suivant la revendication 5,
dans laquelle l'unité de capteur photo-optique comprend une diode électroluminescente et un phototransistor et dans laquelle, à l'aide d'une quantité de lumière et/ou d'une intensité de lumière émise par la diode électroluminescente dans le phototransistor, la séparation de la connexion entre l'installation (1) et l'appareil (2) de communication peut être détectée.

7. Installation suivant l'une des revendications 5 ou 6,
dans laquelle le capteur (121) de sécurité est agencé pour être activé, si la connexion à l'appareil (2) de communication est produite sur le deuxième élément (12) de connexion par fiche Ethernet.

8. Installation suivant l'une des revendications 1 à 7,
dans laquelle le premier élément (11) de connexion par fiche Ethernet est une fiche femelle RJ45 ou M12 et dans laquelle le deuxième élément (12) de connexion par fiche Ethernet est une fiche mâle RJ45 ou M12.
